# EUROPÄISCHE PATENTANMELDUNG

(11) **EP 0 563 646 A1**
(43) Veröffentlichungstag der Anmeldung: **06.10.1993**
(21) Anmeldenummer: 93104025.7
(22) Anmeldetag: 12.03.1993
(51) Int. Cl.: B01D 17/02, B01D 61/14, C10M 175/00

(54) **Querstromfiltrationsanlage mit Eintauch-Umwälzpumpe**

(30) Priorität: 09.05.1992 DE 4215294; 25.03.1992 DE 9203968 U
(71) Anmelder: GÜTLING GMBH, D-70704 Fellbach (DE)
(72) Erfinder: Schwering, Hans Ulrich, Dr. Dipl.-Chem., W-7250 Leonberg (DE)
(74) Vertreter: KOHLER SCHMID + PARTNER

(57) **Zusammenfassung**

Bei einer Querstromfiltrationsanlage (1) zum Abtrennen von Ölen, Fetten, Schmutzpartikeln oder anderen unerwünschten Stoffen aus Flüssigkeiten mit einer Pumpe (6) zum Fördern der Flüssigkeiten, mit einem Arbeitsabteil (3), aus welchem die zu behandelnde Flüssigkeit mit Hilfe der Pumpe (6) entnommen und einer Filtrationsstufe (7) zugeführt werden kann, deren Permeat aus der Anlage (1) abgeleitet und deren Retentat wieder in das Arbeitsabteil (3) zurückgeleitet werden kann, und mit einem Spülabteil (4), aus welchem eine Spüllösung entnommen und der Filtrationsstufe (7) zugeführt werden kann, wobei das Retentat der Spüllösung wieder in das Spülabteil (4) zurückgeleitet werden kann, ist ein einziger Tank (2) vorgesehen, der in drei separate Kammern (3,4,5) unterteilt ist, von denen eine das Arbeitsabteil (3), eine das Spülabteil (4) und eine ein Pumpabteil (5) bildet, wobei das Pumpabteil (5) eine Eintauch-Umwälzpumpe (6) zum Fördern der Flüssigkeiten enthält und wobei Fußventile (8a,8b) zwischen dem Pumpabteil (5) und Arbeitsabteil (3) sowie zwischen dem Pumpabteil (5) und dem Spülabteil (4) vorgesehen sind, über die alternativ eine kommunizierende Verbindung zwischen dem Pumpabteil (5) und einer der beiden anderen Kammern (3,4) hergestellt werden kann.
Dadurch können auch Lösungen mit aggressiven oder stark abrasiven Stoffen ohne Sicherheits- und Dichtungsprobleme aufbereitet werden.

## Beschreibung

Die Erfindung betrifft eine Querstromfiltrationsanlage zum Abtrennen von Ölen, Fetten, Schmutzpartikeln oder anderen unerwünschten Stoffen aus Flüssigkeiten mit einer Pumpe zum Fördern der Flüssigkeiten, mit einem Arbeitsabteil, aus welchem die zu behandelnde Flüssigkeit mit Hilfe der Pumpe entnommen und einer Filtrationsstufe zugeführt werden kann, deren Permeat aus der Anlage abgeleitet und deren Retentat wieder in das Arbeitsabteil zurückgeleitet werden kann, und mit einem Spülabteil, aus welchem mit Hilfe der Pumpe eine Spüllösung entnommen und der Filtrationsstufe zugeführt werden kann, wobei das Retentat der Spüllösung wieder in das Spülabteil zurückgeleitet werden kann.

Eine solche Vorrichtung ist beispielsweise bekannt aus dem Prospekt "Ultrafiltration Microfiltration" der Firma Gütling vom November 1991.

Die bekannte Vorrichtung weist zwei getrennte Behälter für ein zu behandelndes Arbeitsmedium und ein Spülmedium sowie eine außenliegende Umwälzpumpe auf, die wechselweise mit einem der beiden Behälter über Saugleitungen verbunden wird. Die Anlage dient zur Abtrennung von Ölen, Fetten und/oder Feststoffen aus Emulsionen, insbesondere Öl-Wasser-Gemischen oder abrasive Stoffe enthaltenden Lösungen. Derartige Flüssigkeitsgemische fallen in mehr oder minder großen Mengen in der metallverarbeitenden Industrie als Gleitschleifabwasser, als Zieh- und Walzemulsionen beim Tiefziehen, Drahtziehen und Blechwalzen, als Entfettungs- und Waschwasser, Abwasser aus Verkehrsbetrieben und Kfz-Werkstätten, aus Lack herstellenden und verarbeitenden Betrieben, aus Betrieben der chemischen Industrie sowie als alkalische Fotoresist-Abwasser aus der Leiterplattenfertigung an. Das zu behandelnde Medium wird mit relativ hoher Geschwindigkeit und einem bestimmten Druck an einer porösen Filtermembran vorbeigeleitet, deren Porengröße so bemessen ist, daß kleine Moleküle, hauptsächlich Wasser, durchtreten können, wahrend größere Teilchen wie Öl- bzw. Fett-Moleküle oder Schleifkörperpartikel sowie Abrieb zurückgehalten werden. In bestimmten Abständen wird die Behandlung des Mediums unterbrochen und Spülmittel aus dem entsprechenden Behälter von der Pumpe angesaugt und durch die Filtrationsstufe geschickt, um die letztere von den auf der Oberfläche der Filtermembran angesammelten ausgeschiedenen Stoffen zu befreien.

Bei den bekannten Querstromfiltrationsanlagen entsteht ein sehr hoher Wartungsaufwand durch den relativ häufig notwendig werdenden Austausch von Gleitringdichtungen für die normalerweise zum Transport der zu reinigenden Flüssigkeit und zur Druckerzeugung beim Einleiten des Flüssigkeitsgemisches in die Filtrationsstufe verwendeten außenliegenden Umwälzpumpen. Insbesondere greifen aggressive Lösungen, die häufig abrasive Stoffe enthalten, beispielsweise mechanischen Abrieb aus spanabhebenden Bearbeitungsvorgängen, Schleifkörper und Schleifabrieb beim Recyclen von Gleitschleiflösungen oder die beim sauren Gleitschleifen in der Lösung enthaltenden Säureanteile, die Dichtungen an und machen sie nach kurzer Betriebszeit unbrauchbar. Außerdem kristallisieren die in den meisten Fällen den Reinigungsbädern beigefügten Alkalien häufig auf den Dichtungen aus und erzeugen beim Betrieb der Pumpe Riefen in den Dichtringen, so daß die Pumpe ebenfalls nach einer gewissen Zeit undicht wird und leckt.

Der scheinbar naheliegende Einsatz von magnetgekuppelten Pumpen anstelle der gleitringgedichteten Pumpen bringt keine Lösung des Problems, da die in den zu reinigenden Flüssigkeiten typischerweise vorhandenen magnetischen Späne bzw. der Metallabrieb den Spalttopf der Pumpen zerstören können.

Ebenso scheidet der denkbare Einsatz einer Sperrwasserpumpe mit gespülter Dichtung für die praktische Anwendung aus. Das zusätzlich in die Anlage einzubringende Sperrwasser müßte nämlich im Dauerbetrieb ebenfalls einer ständigen Reinigung unterzogen werden, da es zwangsläufig mit der zu behandelnden Flüssigkeit kontaminiert werden würde. Dadurch würden bei üblichen Anlagengrößen die Volumenströme von Sperrwasserzulaufmenge und Permeat in der gleichen Größenordnung liegen, so daß bei den für Recyclinganlagen typischen geringen Volumendurchsätzen wegen der ständig erforderlichen Frischwasserzufuhr für die Erneuerung des Sperrwassers ein wirtschaftliches Recycling gar nicht möglich wäre.

Aufgabe der vorliegenden Erfindung ist es daher, eine Querstromfiltrationsanlage der eingangs genannten Art vorzustellen, die kompakt und wartungsfreundlich ist, die insbesondere auch für die Behandlung von aggressiven Lösungen oder Flüssigkeiten mit stark abrasiven Stoffen, z.B. für die Entsorgung von Kühlschleifmittel mit Abrieb und Schleifkörpern aus Schleifoperationen eingesetzt werden kann und die sich als mobile, variabel einsetzbare Anlage zur Standzeitverlängerung von Wasch- oder Entfettungsbädern auch bei kleinerem Flüssigkeitsaufkommen oder bei dezentralem Einsatz, beispielsweise an industriellen Fertigungsstraßen eignet.

Diese Aufgabe wird erfindungsgemäß dadurch gelöst, daß ein Tank vorgesehen ist, der in drei separate Kammern unterteilt ist, von denen eine das Arbeitsabteil, eine das Spülabteil und eine ein Pumpabteil bildet, wobei das Pumpabteil eine Eintauch-Umwälzpumpe zum Fördern der Flüssigkeiten enthält und wobei Fußventile zwischen dem Pumpabteil und dem Arbeitsabteil sowie zwischen dem Pumpabteil und dem Spülabteil vorgesehen sind, über die alternativ eine kommunizierende Verbindung zwischen dem Pumpabteil und einer der beiden anderen Kammern hergestellt werden kann.

Der Einsatz einer wartungsfreundlichen dichtungslosen Eintauch-Umwälzpume macht ein häufiges Auswechseln von durch Schleifkörper, Abrieb oder Säuren schnell verschlissenen Gleitringdichtungen überflüssig. Außerdem ist die erfindungsgemäße Vorrichtung durch ihre integrierte Bauweise besonders platzsparend, so daß sie auch in kleineren Fertigungsbetrieben zu der gesetzlich geforderten Standzeitverlängerung von Entfettungsbädern oder Gleitschleiflösungen eingesetzt werden kann. Aus der kompakten Bauweise, die lediglich einen einzigen Tank aufweist, folgt auch ein geringerer Materialaufwand bei der Herstellung der erfindungsgemäßen Vorrichtung.

Ein weiterer Vorteil der erfindungsgemäßen Vorrichtung besteht darin, daß durch die räumliche Nähe des Spülabteils zum Arbeitsabteil bzw. zu dem mit dem Arbeitsabteil zeitweise kommunizierend verbundenen Pumpabteil das Spülmittel im Spülabteil ohne zusätzliche Heizungsmaßnahmen auf die Temperatur des Arbeitsmediums im Arbeitsabteil angehoben wird, die bei vielen Anwendungen erheblich über der Zimmertemperatur liegt. Durch ein höher temperiertes Spülmittel wird einerseits eine bessere Spülwirkung erzielt, andererseits werden die Filtermembranen der Filtrationsstufe vor starken Temperatursprüngen beim Mediumswechsel zwischen Arbeitsmedium und Spülmedium bewahrt. Dadurch bleiben die Filterelemente von den durch Temperaturwechsel bedingten mechanischen Spannungen verschont, was ihre Lebensdauer unter Umständen erheblich verlängern kann.

Bei einer bevorzugten Ausführungsform der erfindungsgemäßen Querstromfiltrationsanlage ist die Eintauch-Umwälzpumpe im wesentlichen dichtungslos. Dadurch tauchen von vornherein auch bei der Verarbeitung von stark abrasiven Stoffen keine Dichtungsprobleme mehr auf. Auch die Sicherheit gegen das Auslaufen von aggressiven oder wassergefährdenden Medien aus der Anlage wird erhöht, da zumindest eine leck gewordene Pumpe als Fehlerursache ausscheidet.

Um die Wartungsfreiheit zu erhöhen und den störungsfreien Betrieb der erfindungsgemäßen Querstromfiltrationsanlage über längere Zeit zu gewährleisten, ist bei einer bevorzugten Ausführungsform ein Motorschaltgerät mit integriertem Trockenlaufschutz zum Schalten der Eintauch-Umwälzpumpe vorgesehen. Eine zusätzliche Überwachung des Systems bei geringem Flüssigkeitsanfall durch eine Bedienungsperson fällt damit ebenfalls weg.

Im einfachsten Fall kann als Trockenlaufschutz für die Eintauch-Umwälzpumpe ein in den Tank ragender Magnetschwimmschalter vorgesehen sein, der als simples mechanisches Teil wartungsfrei, störungsunempfindlich und äußerst zuverlässig ist.

Eine weitere Überwachungsfunktion wird bei einer bevorzugten Ausführungsform dadurch überflüssig, daß im Zulauf für die zu behandelnde Flüssigkeit in das Arbeitsabteil ein Zulaufventil vorgesehen ist, das von einem Schwimmer direkt mechanisch betätigt wird.

Bei einer anderen Ausführungsform sind die Zwischenwände zwischen den Kammern niedriger als die Außenwand des Tankes, so daß die Kammern ineinander überlaufen können, ohne daß der Behälter selbst nach außen hin überläuft. Die Meßeinrichtung kann dann aus einem einzigen Füllstandsschalter bestehen, mit dem sowohl die Eintauch-Umwälzpumpe, das Zulaufventil und ein Übervollalarm angesteuert werden können, so daß für den Trockenlaufschutz, die Füllstandsregelung und den Übervollalarm lediglich ein einziger Meßfühler mit drei Schaltpunkten erforderlich sind, was die erfindungsgemäße Vorrichtung noch kompakter und billiger gestaltet.

In den Rahmen der Erfindung fällt auch ein Verfahren zum Betrieb der erfindungsgemäßen Querstromfiltrationsanlage, bei dem im Arbeitsbetrieb das Arbeitsabteil durch den Zulauf mit zu behandelnder Flüssigkeit befüllt wird, wobei das Fußventil zwischen Pumpabteil und Arbeitsabteil geöffnet und das Fußventil zwischen Pumpabteil und Spülabteil geschlossen ist, und wobei die Eintauch-Umwälzpumpe zu behandelnde Flüssigkeit aus dem mit dem Arbeitsabteil kommunizierenden Pumpabteil in die Filtrationsstufe abpumpt, deren Permeat aus der Anlage abgeleitet und deren Retentat in das Arbeitsabteil zurückgeleitet wird und bei dem im Spülbetrieb das Fußventil zwischen Spülabteil und Pumpabteil geöffnet und das Fußventil zwischen Pumpabteil und Arbeitsabteil geschlossen ist, wobei die Eintauch-Umwälzpumpe mit einem Spülmittel angereicherte Flüssigkeit aus dem mit dem Spülabteil kommunizierenden Pumpabteil in die Filtrationsstufe abpumpt, deren Permeat aus der Anlage abgeleitet und deren Retentat in das Spülabteil zurückgeleitet wird.

Bei einer bevorzugten Ausbildung des Betriebsverfahrens wird das Pumpabteil vor einem Wechsel zwischen Arbeitsbetrieb und Spülbetrieb durch Schließen beider Fußventile von den anderen beiden Kammern abgeschottet, und während der Abschottungsphase wird die im Pumpabteil befindliche Flüssigkeit abgepumpt, wobei bei einem Wechsel von Arbeitsbetrieb auf Spülbetrieb die Flüssigkeit in das Arbeitsabteil und bei einem Wechsel von Spülbetrieb auf Arbeitsbetrieb die Flüssigkeit in das Spülabteil abgepumpt wird. Auf diese Weise wird eine Vermischung von Arbeitsmedium und Spülmedium größtenteils ausgeschlossen.

Bevorzugt ist eine Ausbildung des erfindungsgemäßen Verfahrens, bei dem bei einer Überladung der Spülflüssigkeit mit den unerwünschten Stoffen nur ein Teil der Spülflüssigkeit verworfen wird, während der Rest nachgeschärft und wiederverwertet wird. Insbesondere ist es vorteilhaft, wenn nur die im Pumpabteil befindliche Spülflüssigkeit bei einem Wechsel von Spülbetrieb auf Arbeitsbetrieb verworfen wird, während die im Spülabteil befindliche Spülflüssigkeit nachgeschärft und weiterverwendet wird.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln, für sich oder zu mehreren in beliebiger Kombination Anwendung finden. Es zeigen:
- Fig.1: ein schematisches Funktionsschema der erfindungsgemäßen Querstromfiltrationsanlage und
- Fig.2: ein schematisches Funktionsschema einer Anlage nach dem Stand der Technik.

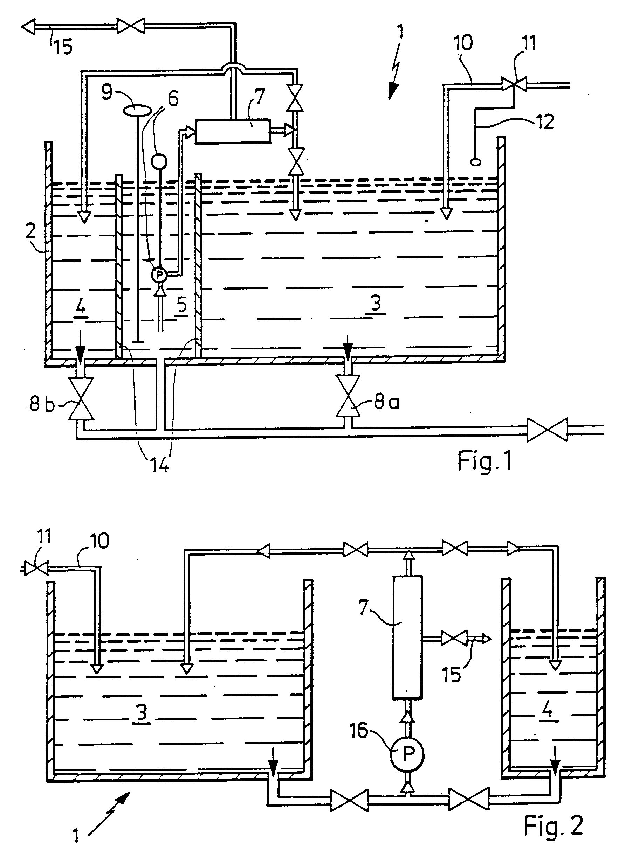

Im Gegensatz zu der üblichen, in Fig.2 gezeigten Querstromfiltrationsanlage 1, die ein Arbeitsabteil 3 mit der zu behandelnden Flüssigkeit und getrennt davon ein Spülabteil 4 mit einer Spülmittellösung aufweist, besteht die in Fig.1 gezeigte erfindungsgemäße Querstromfiltrationsanlage aus nur einem Tank 2, der durch Trennwände 14 in drei verschiedene Kammern 3,4,5 aufgeteilt ist, von denen die größte das Arbeitsabteil 3 und die beiden kleineren das Spülabteil 4 und das Pumpabteil 5 bilden.

Ein weiterer wesentlicher Unterschied zu herkömmlichen Anlagen besteht darin, daß zur Förderung der zu behandelnden Flüssigkeit aus dem Arbeitsabteil 3 bzw. der Spüllösung aus dem Spülabteil 4 keine gleitringgedichtete, extern angeordnete Pumpe 16 verwendet wird, sondern eine im Pumpabteil 5 angeordnete, vorzugsweise dichtungslose Eintauch-Umwälzpumpe 6. Dadurch werden einerseits Dichtungsprobleme innerhalb der Pumpe vermieden, die durch abrasive Medien, wie z.B. Schleifmittelkörper, Schleifabrieb, Späne und dergleichen in der zu behandelnden Flüssigkeit, die von der Pumpe 6 gefördert wird, entstehen, andererseits wird durch die Anordnung der Eintauch-Umwälzpumpe 6 in einem nach außen hin abgeschlossenen Pumpabteil 5 ein Leckproblem aufgrund von austretenden aggressiven Flüssigkeiten wie beispielsweise säurehaltigen Gleitschleiflösungen von vornherein vermieden.

Ein weiterer Vorteil der kompakten Anordnung der drei Kammern 3,4,5 in einem einzigen Tank 2 liegt darin, daß die Spüllösung ohne zusätzliche Heizeinrichtungen durch den direkten Kontakt ihrer Trennwände 14 zu dem mit zumeist heißem Arbeitsmedium gefüllten Arbeitsabteil 3 und dem im Arbeitsbetrieb ebenfalls mit heißem Arbeitsmedium gefüllten Pumpabteil 5 auf die Temperatur des Arbeitsmediums angehoben wird. Dadurch wird einerseits eine bessere Spülwirkung, andererseits eine Schonung der Filtrationsstufe 7 erzielt, da bei einem Mediumswechsel zwischen Arbeitsmedium und Spülmedium keine großen Temperatursprünge und damit verbundene mechanische Verspannungen mehr auftreten.

Im Arbeitsbetrieb wird das Arbeitsabteil 3 durch den Zulauf 10 über ein Zulaufventil 11 mit der zu behandelnden Flüssigkeit befüllt. Das Zulaufventil 11 kann von einer Meßeinrichtung zur Messung des Flüssigkeitsstandes im Tank 2 angesteuert werden. Diese kann, wie in Fig.1 gezeigt, eine in das Arbeitsabteil 3 ragende Schwimmermimik 12 sein. Eine andere Realisierungsmöglichkeit besteht darin, mit einem einzigen Füllstandsschalter 9 im Pumpabteil 5 den Trockenlaufschutz der Pumpe 6, das Zulaufventil 11 und eine Übervollalarmgabe zu steuern. Auf diese Weise benötigt die Anlage 1 nur eine einzige Vorrichtung zur Füllstandsmessung.

Während des Arbeitsbetriebes ist das Fußventil 8a zwischen Pumpabteil 5 und Arbeitsabteil 3 geöffnet, so daß die beiden Kammern 3,5 in kommunizierender Verbindung stehen. In diesem Betriebszustand bleibt das zwischen Pumpabteil 5 und Spülabteil 4 vorgesehene Fußventil 8b geschlossen. Die Eintauch-Umwälzpumpe 6 pumpt die zu behandelnde Flüssigkeit aus dem mit dem Arbeitsabteil 3 kommunizierenden Pumpabteil 5 in die Filtrationsstufe 7, deren Permeat über eine Permeatablaufleitung 15 aus der Anlage 1 abgeleitet wird, während das Retentat aus der Filtrationsstufe 7 des Arbeitsabteil 3 zurückgeleitet wird.

Dadurch reichert sich die verbleibende zu behandelnde Flüssigkeit immer weiter mit den unerwünschten Stoffen, wie z.B. Ölen, Fetten, Schutzpartikeln, Abrieb, Schleifmittelrückständen und dergleichen an. Außerdem setzt sich die Membranoberfläche der Filterelemente in der Filtrationsstufe 7 mehr und mehr zu, so daß irgendwann der Punkt erreicht ist, an dem die Effizienz der Filtration derart nachgelassen hat, daß eine Spülung der Filtrationsstufe 7 und/oder eine Entsorgung des aufkonzentrierten Arbeitsmediums im Arbeitsabteil 3 und im Pumpabteil 5 notwendig wird.

Vor einem Wechsel zwischen Arbeitsbetrieb und Spülbetrieb empfiehlt es sich, das Pumpabteil 5 durch Schließen beider Fußventile 8a,8b von den anderen beiden Kammern 3,4 abzuschotten und während der Abschottungsphase die im Pumpabteil 5 befindliche Flüssigkeit abzupumpen. Bei einem Wechsel von Arbeitsbetrieb auf Spülbetrieb wird die Flüssigkeit in das Arbeitsabteil 3, bei einem Wechsel von Spülbetrieb auf Arbeitsbetrieb in das Spülabteil 4 abgepumpt.

Bei Spülbetrieb ist das Fußventil 8b zwischen Spülabteil 4 und Pumpabteil 5 geöffnet und das Fußventil 8a zwischen Pumpabteil 5 und Arbeitsabteil 3 geschlossen. Die Eintauch-Umwälzpumpe 6 pumpt nun die mit einem Spülmittel angereicherte Flüssigkeit aus dem mit dem Spülabteil 4 kommunizierenden Pumpabteil 5 in die Filtrationsstufe 7, wodurch die mit Schmutz, Öl usw. belegte Oberfläche der Filtermembranen gereinigt wird. Das bei diesem Vorgang aus der Filtrationsstufe 7 austretende klare Permeat wird wiederum über die Permeatablaufleitung 15 aus der Anlage 1 abgeleitet, während das Retentat mit dem die Schmutzstoffe enthaltenden Spülmittel in das Spülabteil 4 zurückgeleitet wird.

Wenn der Spülvorgang mehrmals wiederholt worden ist, ist die Spülflüssigkeit irgendwann mit den unerwünschten Stoffen überladen und muß entweder verworfen oder nachgeschärft werden. Besonders günstig ist es, wenn nur ein Teil der Spülflüssigkeit verworfen wird, insbesondere das vor dem Wechsel von Spülbetrieb auf Arbeitsbetrieb im Pumpabteil 5 befindliche Volumen an Spülflüssigkeit. Die im Spülabteil 4 befindliche Flüssigkeit kann dann verdünnt, nachgeschärft und weiterverwendet werden.

## Patentansprüche

1. Querstromfiltrationsanlage (1) zum Abtrennen von Ölen, Fetten, Schmutzpartikeln oder anderen unerwünschten Stoffen aus Flüssigkeiten mit einer Pumpe (6) zum Fördern der Flüssigkeiten, mit einem Arbeitsabteil (3), aus welchem die zu behandelnde Flüssigkeit mit Hilfe der Pumpe (6) entnommen und einer Filtrationsstufe (7) zugeführt werden kann, deren Permeat aus der Anlage (1) abgeleitet und deren Retentat wieder in das Arbeitsabteil (3) zurückgeleitet werden kann, und mit einem Spülabteil (4), aus welchem mit Hilfe der Pumpe (6) eine Spüllösung entnommen und der Filtrationsstufe (7) zugeführt werden kann, wobei das Retentat der Spüllösung wieder in das Spülabteil (4) zurückgeleitet werden kann,
dadurch gekennzeichnet,
daß ein Tank (2) vorgesehen ist, der in drei separate Kammern (3,4,5) unterteilt ist, von denen eine das Arbeitsabteil (3), eine das Spülabteil (4) und eine ein Pumpabteil (5) bildet, wobei das Pumpabteil (5) eine Eintauch-Umwälzpumpe (6) zum Fördern der Flüssigkeiten enthält und wobei Fußventile (8a,8b) zwischen dem Pumpabteil (5) und Arbeitsabteil (3) sowie zwischen dem Pumpabteil (5) und dem Spülabteil (4) vorgesehen sind, über die alternativ eine kommunizierende Verbindung zwischen dem Pumpabteil (5) und einer der beiden anderen Kammern (3,4) hergestellt werden kann.

2. Anlage nach Anspruch 1, dadurch gekennzeichnet, daß die Eintauch-Umwälzpumpe (6) im wesentlichen dichtungslos ist.

3. Anlage nach einem der vorhergehenden Ansprüche, dadurch gekennzeichnet, daß ein Motorschaltgerät mit integriertem Trockenlaufschutz zum Schalten der Eintauch-Umwälzpumpe (6) vorgesehen ist.

4. Anlage nach Anspruch 3, dadurch gekennzeichnet, daß ein in den Tank (2) ragender Füllstandsschalter (9) als Trockenlaufschutz für die Eintauch-Umwälzpumpe (6) vorgesehen ist.

5. Anlage nach einem der vorhergehenden Ansprüche, dadurch gekennzeichnet, daß ein Zulauf (10) für die zu behandelnde Flüssigkeit in das Arbeitsabteil (3) sowie ein Zulaufventil (11) vorgesehen ist, das von einer Meßeinrichtung zur Messung des Flüssigkeitsstandes im Tank (2) ansteuerbar ist.

6. Anlage nach Anspruch 5, dadurch gekennzeichnet, daß die Meßeinrichtung eine in den Tank (2) ragende Schwimmermimik (12) ist.

7. Anlage nach Anspruch 4 und 6, dadurch gekennzeichnet, daß mit einem einzigen Füllstandsschalter (9) mit mehreren Schaltpunkten sowohl die Eintauch-Umwälzpumpe (6) als auch das Zulaufventil (11) sowie ein Übervollalarmsignal angesteuert werden können.

8. Anlage nach einem der vorhergehenden Ansprüche, dadurch gekennzeichnet, daß die Anlage (1) nur eine einzige Vorrichtung zur Füllstandsmessung aufweist, welche vorzugsweise im Pumpabteil (5) vorgesehen ist.

9. Verfahren zum Betrieb einer Querstromfiltrationsanlage (1) nach einem der Ansprüche 1 bis 8, dadurch gekennzeichnet, daß
- im Arbeitsbetrieb das Arbeitsabteil (3) durch den Zulauf (10) mit zu behandelnder Flüssigkeit befüllt wird, wobei das Fußventil (8a) zwischen Pumpabteil (5) und Arbeitsabteil (3) geöffnet und das Fußventil (8b) zwischen Pumpabteil (5) und Spülabteil (4) geschlossen ist, und wobei die Eintauch-Umwälzpumpe (6) zu behandelnde Flüssigkeit aus dem mit dem Arbeitsabteil (3) kommunizierenden Pumpabteil (5) in die Filtrationsstufe (7) abpumpt, deren Permeat aus der Anlage (1) abgeleitet und deren Retentat in das Arbeitsabteil (3) zurückgeleitet wird,
- und daß im Spülbetrieb das Fußventil (8b) zwischen Spülabteil (4) und Pumpabteil (5) geöffnet und das Fußventil (8a) zwischen Pumpabteil (5) und Arbeitsabteil (3) geschlossen ist, wobei die Eintauch-Umwälzpumpe (6) mit einem Spülmittel angereicherte Flüssigkeit aus dem mit dem Spülabteil (4) kommunizierende Pumpabteil (5) in die Filtrationsstufe (7) abpumpt, deren Permeat aus der Anlage (1) abgeleitet und deren Retentat in das Spülabteil (4) zurückgeleitet wird.

10. Verfahren nach Anspruch 9, dadurch gekennzeichnet, daß das Pumpabteil (5) vor einem Wechsel zwischen Arbeitsbetrieb und Spülbetrieb durch Schließen beider Fußventile (8a,8b) von den anderen beiden Kammern (3,4) abgeschottet wird und daß während der Abschottungsphase die im Pumpabteil (5) befindliche Flüssigkeit abgepumpt wird, wobei bei einem Wechsel von Arbeitsbetrieb auf Spülbetrieb die Flüssigkeit in das Arbeitsabteil (3) und bei einem Wechsel vom Spülbetrieb auf Arbeitsbetrieb die Flüssigkeit in das Spülabteil (4) abgepumpt wird.

11. Verfahren nach Anspruch 9 oder 10, dadurch gekennzeichnet, daß bei einer Überladung der Spülflüssigkeit mit den unerwünschten Stoffen nur ein Teil der Spülflüssigkeit verworfen wird, während der Rest nachgeschärft und wiederverwertet wird.

12. Verfahren nach Anspruch 10 oder 11, dadurch gekennzeichnet, daß nur die im Pumpabteil (5) befindliche Spülflüssigkeit bei einem Wechsel von Spülbetrieb auf Arbeitsbetrieb verworfen wird, während die im Spülabteil (4) befindliche Spülflüssigkeit nachgeschärft und weiterverwendet wird.
